# DEMANDE DE BREVET EUROPEEN

(11) **EP 0 974 833 A1**
(43) Date de publication de la demande: **26.01.2000**
(21) Numéro de dépôt: 99401631.9
(22) Date de dépôt: 01.07.1999
(51) Int. Cl.: G01N 21/89

(54) **Dispositif de détection des défauts superficiels de bandes métalliques en défilement**

(30) Priorité: 21.07.1998 FR 9809272
(71) Demandeur: SOLLAC, 92800 Puteaux (FR)
(72) Inventeur: Vanhee, Patrick, Anoux, 54150 Briey (FR)
(74) Mandataire: Neyret, Daniel Jean Marie

(57) **Abrégé**

L'invention concerne un dispositif de détection des défauts superficiels de bandes métalliques (1) en défilement, caractérisé en ce qu'il comporte des moyens (2) pour éclairer la zone (3) de la bande (1) à inspecter, au moins un couple de caméras (4, 5) captant chacune périodiquement une image de la même portion (6) de ladite zone (3), une unité de calcul (7) comportant des moyens pour reconstituer une image stéréoscopique de ladite portion (6) à partir des images fournies par le couple de caméras (4, 5), des moyens pour détecter sur ladite image stéréoscopique les objets qui présentent un relief en bosse ou en creux par rapport à la surface de la bande (1) supérieur à un seuil prédéterminé, des moyens pour analyser les images desdits objets, et des moyens (10) pour restituer à l'opérateur le résultat de cette analyse.

## Description

L'invention concerne la production de bandes métalliques, notamment en acier. Plus précisément, elle concerne les techniques de contrôle de la qualité de surface de ces bandes.

Les installations de production de bandes métalliques, notamment en acier, à partir de produits initialement plus épais comportent des outils tels que des laminoirs, des fours de recuit, des installations de décapage. Avant et/ou après le passage du produit dans ces outils, on pratique souvent une inspection de sa surface à l'aide de dispositifs automatiques, dans le but d'y détecter la présence éventuelle de défauts métallurgiques tels que des dépressions, des rayures, des boursouflures, une subsistance de calamine... La présence de tels défauts peut être l'indice de dysfonctionnements des outils situés en amont du lieu du contrôle, auxquels il faut remédier, et elle peut rendre inutile la poursuite du traitement du produit si les défauts sont suffisamment graves pour empêcher l'obtention de produits finaux de la qualité désirée.

Les dispositifs d'inspection de la surface des bandes métalliques classiquement utilisés comportent essentiellement :
- des moyens pour éclairer la zone de la bande à inspecter ;
- une caméra (linéaire ou matricielle) qui recueille périodiquement l'image de ladite zone, à des intervalles de temps suffisamment rapprochés pour qu'une inspection de la totalité de la bande soit possible ;
- une installation de traitement de cette image, qui en extrait les « objets » qui se détachent par leur couleur ou leur pouvoir réfléchissant du fond uniforme que constitue la surface de la bande, et qui permet de reconnaître, parmi ces objets, lesquels constituent réellement des défauts métallurgiques et lesquels correspondent à d'autres phénomènes sans influence sur la qualité de la bande ; cette reconnaissance s'effectue à l'aide de logiciels qui comparent les caractéristiques des objets détectés à celles que l'on observe normalement pour les défauts que l'installation doit signaler à l'opérateur.

Parmi les objets détectés par l'installation de traitement de l'image et que celle-ci doit reconnaître comme n'étant pas des défauts métallurgiques (et, donc, ne pas signaler en tant que tels à l'opérateur), on peut citer des taches légèrement blanchâtres qui subsistent à la surface de la bande après son décapage, ou des résidus d'huile. L'expérience montre qu'une proportion très importante (parfois plus de 90 %) des objets détectés fait partie de cette catégorie. Il en résulte qu'une grande partie du temps de calcul de l'installation de traitement d'image est consacrée à l'analyse d'objets sans intérêt pour l'opérateur.

Le but de l'invention est de proposer un dispositif de détection de défauts superficiels des bandes métalliques permettant de réaliser cette détection plus efficacement que les dispositifs de l'art antérieur.

A cet effet, l'invention a pour objet un dispositif de détection des défauts superficiels de bandes métalliques en défilement, caractérisé en ce qu'il comporte des moyens pour éclairer la zone de la bande à inspecter, au moins un couple de caméras captant chacune périodiquement une image de la même portion de ladite zone, une unité de calcul comportant des moyens pour reconstituer une image stéréoscopique de ladite portion à partir des images fournies par le couple de caméras, des moyens pour détecter sur ladite image stéréoscopique les objets qui présentent un relief en bosse ou en creux par rapport à la surface de la bande supérieur à un seuil prédéterminé, des moyens pour analyser les images desdits objets, et des moyens pour restituer à l'opérateur le résultat de cette analyse.

Comme on l'aura compris, l'invention consiste à réaliser l'inspection d'une zone donnée de la bande en discriminant, parmi les objets qui sont distingués par l'installation, ceux qui présentent un relief (en bosse ou en creux) par rapport à la portion de surface de la bande qui les environne et ceux qui ne présentent pas un tel relief. On pose pour principe que les objets qui ne présentent pas de relief (ou en général un relief inférieur à un seuil prédéterminé) ne sont que des taches ou des résidus huileux, et ne correspondent pas à des défauts métallurgiques. Il est donc inutile de poursuivre le traitement de leur image. Quant aux objets présentant un relief, ils sont considérés comme des défauts métallurgiques et traités par l'installation de la manière habituelle, afin de déterminer leur nature exacte et leur caractère de gravité et de les signaler à l'opérateur. Cette inspection est réalisée non plus à l'aide d'une seule, mais de deux caméras visant la même zone de la bande, selon le principe de la vision stéréoscopique.

Les avantages du dispositif selon l'invention par rapport aux dispositifs de l'art antérieur peuvent être exploités de deux façons. On peut choisir de conserver à l'installation ses performances habituelles sur la détection des défauts métallurgiques, mais ces performances pourront être obtenues à l'aide de moyens informatiques moins puissants qu'auparavant (donc moins coûteux), puisqu'ils n'auront plus à traiter les images des objets sans relief qui ne sont manifestement pas des défauts métallurgiques. On peut également choisir de conserver aux moyens informatiques leurs performances habituelles, et de consacrer la puissance de calcul rendue disponible par l'élimination du traitement des objets sans relief à une détection, une identification et une restitution plus fines des défauts et/ou à un traitement plus rapide de leurs images. Ce traitement rapide rend possible l'inspection d'une bande défilant à une plus grande vitesse que dans l'art antérieur, et permet donc d'accompagner une augmentation de la productivité de l'installation de fabrication des bandes.

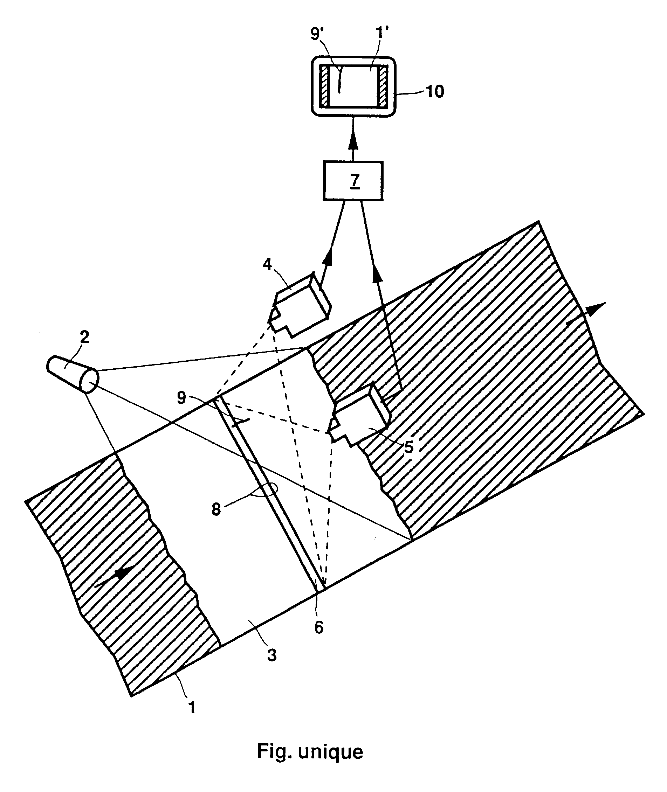

L'invention sera mieux comprise à la lecture de la description qui suit, donnée en référence à la figure unique annexée, qui schématise un exemple d'installation selon l'invention.

La figure unique montre une bande d'acier 1 en défilement, vue en un point quelconque d'une installation de fabrication de telles bandes (par exemple en entrée ou en sortie d'un laminoir à froid, ou d'un bain de décapage, ou d'un four de recuit) où on désire détecter la présence de défauts métallurgiques. Le dispositif de détection de ces défauts comporte, selon l'invention, des moyens 2 pour éclairer un zone 3 couvrant toute la largeur de la bande. Deux caméras 4, 5 sont pointées sur une même portion 6 de cette zone éclairée 3, dans des conditions permettant l'obtention d'une image stéréoscopique de ladite portion 6 par superposition des images recueillies périodiquement et simultanément par chaque caméra 4, 5. Dans la pratique, les axes optiques des caméras 4, 5 peuvent être séparés de 10 à 20 cm environ. Cette image stéréoscopique est reconstituée par une unité de calcul 7, selon des méthodes connues puisque le principe de la vision stéréoscopique est déjà appliqué dans des dispositifs de contrôle dimensionnel des bandes métalliques en défilement, afin de prendre en compte les défauts de planéité de la bande. L'unité de traitement 7 commence par numériser les images recueillies par chaque caméra 4, 5. Puis elle extrait de chaque image les objets qui présentent une anomalie de couleur, de texture ou de contour par rapport au fond uniforme que constitue, normalement, la surface éclairée 3 de la bande 1 dans la portion visée 6. Puis les images de ces objets obtenues par chacune des caméras 4, 5 sont comparées, et l'unité de traitement 7 analyse les différences de dimensions et de positionnement dans les plans images de chaque objet vu par chaque caméra 4, 5, à l'aide de l'image stéréoscopique qu'elle a pu reconstituer. Si l'objet est une tache 8 ou une mince couche de liquide tel qu'une huile de laminage, il ne présente pas de relief significatif par rapport à la surface de la bande 1, et ses deux images doivent être identiques. En revanche, si l'objet est un défaut métallurgique tel qu'une fissure 9, une rayure, une paille ou une dépression, il doit présenter un tel relief, en bosse ou en creux suivant le type de défaut, qui se traduit par des images différentes recueillies par chaque caméra 4, 5. En conséquence, si ce relief est nul ou ne dépasse pas un certain seuil prédéterminé, l'unité de traitement considère que l'objet examiné n'est pas un défaut métallurgique, son traitement n'est pas poursuivi et son existence n'est pas signalée à l'opérateur. Mais si le relief dépasse ledit seuil, le traitement de l'image de l'objet se poursuit de la manière habituelle par une comparaison de cette image avec des caractéristiques de référence, qui sont représentatives des différents types de défauts habituellement constatés sur les bandes en défilement au cours de leur fabrication. Cette comparaison aboutit à une identification du défaut et à une détermination de ses dimensions, ce qui permet d'estimer sa gravité. Une fois le défaut identifié et analysé, il est signalé à l'opérateur, par exemple au moyen d'un écran de visualisation 10 qui, sur la figure, montre l'image 1' de la bande 1 et l'image 9' de la fissure 9. En revanche, la tache 8, qui n'est pas considérée comme un défaut métallurgique, n'apparaît pas sur l'écran 10.

Puisque, selon l'invention, ce travail d'analyse du défaut apparent n'est effectué que sur les objets détectés qui présentent un relief par rapport à la bande, soit une faible proportion des objets qui sont d'abord détectés, il est possible, si on conserve une unité de traitement 7 aussi puissante que dans l'art antérieur, de lui intégrer un logiciel de traitement des images plus complexe et plus performant. On peut ainsi obtenir une finesse accrue de la détection et de l'analyse des défauts, et/ou une plus grande rapidité de cette analyse qui rend possible le contrôle de bandes défilant à une plus grande vitesse.

On peut également envisager de s'écarter du mode précis de traitement des données qui a été décrit, l'essentiel étant, pour rester dans l'esprit de l'invention, que l'on effectue, grâce aux possibilités de vision stéréoscopique données par le couple de caméras 4, 5, une discrimination entre les objets présentant un relief par rapport à la surface de la bande et entre ceux qui n'en présentent pas, et que seules les images des objets en relief soient l'objet d'une analyse poussée.

Dans l'exemple qui a été décrit, on utilise un seul couple de caméras 4, 5, qui visent chacune une même zone qui s'étend sur toute la largeur de la bande 1. Mais il est aussi possible d'employer plusieurs couples de caméras qui ne couvrent chacun qu'une partie de la largeur de la bande 1.

Il est bien évident que l'invention peut s'appliquer à la détection de défauts superficiels de toute bande métallique en défilement, et pas seulement de bandes en acier.

## Revendications

1. Dispositif de détection des défauts superficiels de bandes métalliques (1) en défilement, caractérisé en ce qu'il comporte des moyens (2) pour éclairer la zone (3) de la bande (1) à inspecter, au moins un couple de caméras (4, 5) captant chacune périodiquement une image de la même portion (6) de ladite zone (3), une unité de calcul (7) comportant des moyens pour reconstituer une image stéréoscopique de ladite portion (6) à partir des images fournies par le couple de caméras (4, 5), des moyens pour détecter sur ladite image stéréoscopique les objets qui présentent un relief en bosse ou en creux par rapport à la surface de la bande (1) supérieur à un seuil prédéterminé, des moyens pour analyser les images desdits objets, et des moyens (10) pour restituer à l'opérateur le résultat de cette analyse.
